Europäisches Patentamt

(19) European Patent Office

Office européen des brevets

(11) Numéro de publication: **0 252 790**
**B1**

(12) **FASCICULE DE BREVET EUROPEEN**

(45) Date de publication du fascicule du brevet:
24.10.90

(51) Int. Cl.⁵: **B60R 22/34**

(21) Numéro de dépôt: 87401379.0

(22) Date de dépôt: 18.06.87

(54) **Barillet pour ressort spiral prébandé et son application à un enrouleur de ceinture de sécurité notamment pour véhicule automobile terrestre.**

(30) Priorité: 24.06.86 FR 8609094

(43) Date de publication de la demande:
13.01.88 Bulletin 88/2

(45) Mention de la délivrance du brevet:
24.10.90 Bulletin 90/43

(84) Etats contractants désignés:
DE ES GB IT SE

(56) Documents cités:
EP-A- 0 160 892
DE-A- 2 540 671
US-A- 3 282 529
US-A- 3 312 420
US-A- 4 159 809
US-A- 4 417 703

(73) Titulaire: ECIA - EQUIPEMENTS ET COMPOSANTS
POUR L'INDUSTRIE AUTOMOBILE, F-25400 Audincourt
(Doubs)(FR)

(72) Inventeur: Ballet, Jean-Noel, 3, rue des Carrières,
F-70800 Aillevilliers(FR)

(74) Mandataire: Bressand, Georges et al, c/o CABINET
LAVOIX 2 Place d'Estienne d'Orves, F-75441 Paris
Cédex 09(FR)

## Description

L'invention concerne un barillet à ressort spiral prébandé et son utilisation notamment pour une ceinture de sécurité à enrouleur telle que celle existant sur les véhicules automobiles terrestres.

Pour la sécurité de leurs passagers les automobiles sont équipées de ceintures de sécurité qui, pour en faciliter l'utilisation tout en améliorant le confort et l'efficacité, sont munies d'un enrouleur. Comme on le sait, un tel enrouleur a un double but ; lorsque la ceinture n'est pas utilisée, l'enrouleur maintient celle-ci tendue contre ou à proximité d'une paroi latérale de l'habitacle de manière à ce qu'elle ne gise pas en désordre sur le siège ou le plancher et, qu'ainsi, elle soit facile à saisir pour être mise en oeuvre ; lorsque la ceinture est utilisée, l'enrouleur maintient celle-ci appliquée contre la taille et/ou le torse du passager de manière à ce qu'elle n'entrave pas ses mouvements lents et progressifs tout en pouvant le retenir efficacement sur son siège, sans mou, en cas de déplacement rapide et brutal dans le sens postero-antérieur notamment.

Ce qui, dans un tel enrouleur, maintient la ceinture tendue en permanence est un barillet à ressort spiral prébandé.

Un barillet de ce type est essentiellement constitué d'un boîtier, logé dans ce boîtier d'un moyeu monté de manière à pouvoir y tourner selon son axe et d'un ressort placé dans ce boîtier et enroulé sur ce moyeu de manière que l'une de ses extrémités soit ancrée au boîtier et l'autre au moyeu. Pour développer un couple de rappel, on enroule plus ou moins le ressort spiral sur le moyeu en faisant tourner ce dernier relativement au boîtier pour bander le ressort et on immobilise momentanément l'un par rapport à l'autre barillet et moyeu avant de les accoupler au tambour de l'enrouleur sur lequel se bobine et se débobine la sangle de la ceinture.

Manipuler un tel barillet "armé" c'est-à-dire contenant un ressort prébandé est délicat. Il faut d'abord prébander le ressort de manière qu'à l'état initial, statique, il exerce le couple choisi ; ensuite, suivant le type de fonctionnement que l'on a adopté, lié au sens de rotation pour débobiner la sangle qui peut produire une augmentation ou une diminution du couple de rappel selon que le ressort s'enroule ou se déroule, il faut régler le nombre de tours possibles de moyeu permettant l'extension maximale de la sangle avant que le ressort soit totalement serré dans le sens centripète, spires contre spires, sur le moyeu ou soit totalement desserré, "éclaté", dans le sens centrifuge, spires contre spires, contre le boîtier ; enfin, il faut retenir le ressort prébandé dans son état initial, sans risque de le voir se détendre spontanément, jusqu'au moment où, accouplement fait au besoin à l'encontre du couple intial, on le libérera pour qu'il puisse développer son action.

On voit donc que ces opérations d'armement d'un barillet et d'utilisation d'un barillet armé où s'exerce un couple initial à vaincre au cours des phases préliminaires ne sont pas choses aisées.

Pour tenter de résoudre ces difficultés, le certificat d'utilité français FR 2 482 863 propose une solution. Selon ce document, pour immobiliser momentanément, relativement l'un à l'autre, le moyeu et le boîtier d'un barillet armé à ressort spiral, on utilise une clavette amovible, longitudinale ou transversale, que l'on engage ou dégage d'évidements complementaires, ménagés les uns sur le moyeu et les autres sur le boitier, qui ont été préalablement mises correspondance en vis-à-vis. Cette solution présente de nombreux inconvénients. La mise en correspondance des évidements du moyeu et du boîtier pour y insérer la clavette, est une opération qui demande du temps et de la précision et n'exclut pas le risque devoir s'echapper, en rotation inverse, le moyeu sous l'action du couple du ressort que l'on vient de prébander et qui se «débobine». L insertion de la clavette assure un blocage en rotation bidirectionnel, c'est-à-dire dans les deux sens; une fois immobilisésrelativement l'un à l'autre on ne peut plus faire un réglage progressif du couple initial et/ou du nombre de tours en tournant un peu relativement l'un à l'autre moyeu et boitier. La libération du moyeu parrapport au boitier pour neutraliser, supprimer le blocage au moment de l'accouplement nécessite l'enlèvement de la clavette c'est-à-dire une opération supplémentaire et non automatique qui risque de se produire prématurément avec la conséquence de voir le ressort se «débobiner» ou «éclater» spontanément. Outre ces inconvénients, on observera que la structure des modes de réalisation qu'enseigne ce document est telle, qu'une fois monte dans son boitier, le moyeu ne présente de palier qu'à une de ses extrémités c'est à-dire que le moyeu guidé d'un sel coté peut s'incliner par rapport à son axe de rotation théorique et donc risque de se coincer et de se bloquer, risque qui ne peut qu'augmenter à l'usage car le palier unique s'use rapidement.

Le document US 4 159 809 propose une autre solution pour un barillet de ressort de rappel destiné à une ceinture de sécurité. Ce barillet est constitué d'un boîtier fait d'un corps et d'une couvercle à chacun desquels un ressort spiral est ancré et qu'il faut faire tourner l'une par rapport à l'autre pour bander le ressort. le ressort prébandé est maintenu dans cet état par une liaison frangible qui est automatiquement rompue au montage afin de rendre le barillet actif.

Le document EP 0 160 892, correspendent au préambule de la revendication 1, propose une autre version d'un barillet de rappel dstiné à une ceinture de sécurité. Ce barillet est constitué d'un boîtier fait d'un corps et d'un couvercle tels que le ressort spiral est ancré au couvercle et retenu sur un doigt central intérieur fixe du corps sur lequel il est libre et sur lequel on peut engager un moyeu amovible introduit par un orifice du couvercle. Ce moyeu sert à ancrer le ressort spiral qui est bandé ensuite par rotation relative du corps et du couvercle qui sont munis d'un système anti-retour non neutralisable du type cliquet-rochet qui n'autorise qu'une rotation dans un seul sens.

Le document US 3 312 420 propose une pince amovible tendeuse qui opère entre les extrémités d'un brin d'une ceinture de sécurité afin d'éviter que celle-ci gise en désordre.

Toutes ces solutions présentent des inconvénients: elles sont complexes, coûteuses et peu pratiques notamment.

L'invention a pour but de remédier à des inconvénients de cette nature.

L'invention a pour objet un barillet pour ressort spiral prébandé du type indiqué dans le préambule de la revendication 1. Les particularités distinctives de ce barillet figurent notamment dans la partie caractérisante de cette revendication.

L' invention a aussi pour objet l'application d' un tel barillet armé a un enrouleur de ceinture de sécurité notamment pour vehicule automobile terrestre.

D' autres caractéristiques et avantages de l'invention apparaîtront à la lecture de la description qui suit et à l'examen du dessin, donné seulement à titre d'exemple, où:

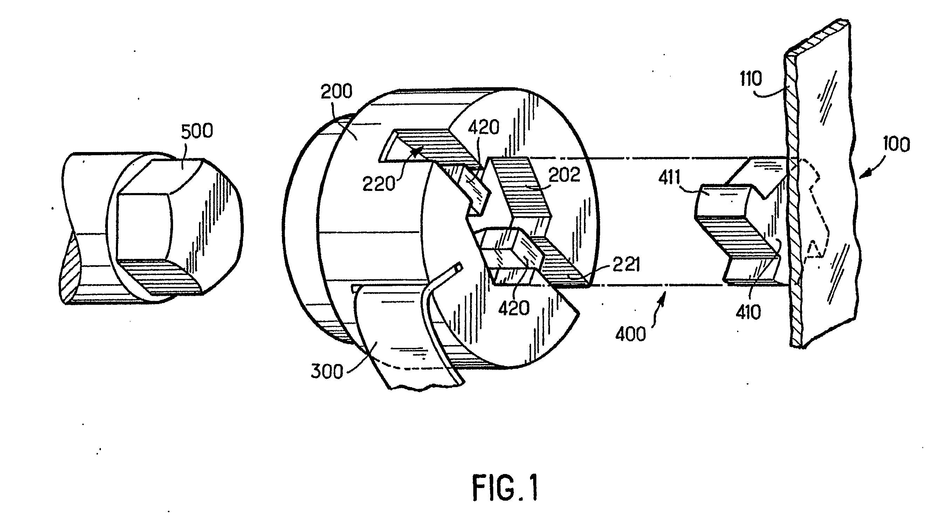

la Fig. 1 est une vue en perspective schématique, éclatée, partielle d'un mode de réalisation d'un barillet selon 1 invention;

la Fig. 2 est une coupe partielle axiale par un plan méridien du mode de réalisation de la Fig. 1 où le dispositif anti-retour est illustré dans sa première position active.

la Fig.3 est une section, par un plan transversal A-A, de la Fig.2 ; et

la Fig.4 est une vue analogue à celle de la Fig.2 où le dispositif anti-retour est illustré dans sa seconde position neutralisée.

Les barillets "armés" à ressort spiral prébandé étant bien connus dans la technique, ne sera décrit et représenté que ce qui concerne directement et/ou indirectement l'invention.

Comme on le voit sur le dessin, le mode de réalisation représenté d'un barillet armé à ressort spiral prébandé selon l'invention comprend un boîtier 100, un moyeu 200, un ressort 300 et un dispositif anti-retour 400.

Le boîtier 100 se compose essentiellement d'un corps 110 avec un fond 111 portant un tourillon 112 et un couvercle 120 percée d'un orifice 121. Ce boîtier est fait par exemple par moulage d'une matière plastique appropriée et corps et couvercle sont retenus l'un sur l'autre par exemple par encliquetage, soudage aux solvants ou ultrasons, collage, vissage, ou toute autre technique courante convenable tenant compte du fait que l'assemblage est démontable ou non. Ce boîtier peut être cylindrique, parallélépipédique, prismatique ou autre, et porte, s'il y a lieu des moyens permettant de le monter et/ou fixer sur une structure telle que la coque d'un véhicule.

Dans ce boîtier 100 est logé un moyeu 200, de préférence à périphérie latérale cylindrique, qui y est monté de manière à pouvoir tourner selon son axe dessiné et non référencé. Le centrage du moyeu sur son axe est assuré par une collerette 201 et un alésage 202, situés à ses faces extrêmales ou bases, qui coopérent, respectivement avec l'orifice 121 du couvercle et le tourillon 112 du fond du corps. Dans la surface latérale du moyeu est ménagée sur au moins une partie d'une génératrice une fente 203, par exemple radiale, qui sert à l'ancrage d'une des extrémités du ressort comme on le précisera par la suite. Comme on le voit, l'alésage 202 se prolonge par une cavité 210 axiale dont au moins l'extrémité opposée à l'alésage est ouverte sur l'extérieure. Cette cavité présente de préférence une section droite à profil polygonal, par exemple hexagonal, pour la raison indiquée par la suite. Dans cette cavité débouche au moins un alvéole 220 qui est ménagé dans l'épaisseur du moyeu et qui présente deux parois 221 en regard parallèles au plan méridien passant par l'axe de l'alvéole, comme dessiné; dans le mode de réalisation on utilise deux alvéoles diamétralement opposés mais, comme on le comprendra par la suite, un suffit et le nombre de deux n'est pas limitatif. Le rôle de ces alvéoles ressortira de ce qui suit. Ce moyeu est par exemple obtenu par moulage d'une matière plastique qui présente sous des conditions de mise en oeuvre particulières déterminées une certaine élasticité.

Un ressort spiral 300 est enroulé autour du moyeu 200. Une des extrémités non représentée du ressort est ancrée au boîtier 100 par exemple au corps 110 de toute manière appropriée, comme il est connu, et l'autre extrémité 302 est ancrée au moyeu 200 ; pour ce faire, par exemple l'extrémité 302 est pliée pour ête engagée dans la fente 203 mais toute autre technique est utilisable par exemple, le vissage, rivetage... . Ce ressort est fait d'une bande par exemple en acier, en bronze allié ou en matière plastique.

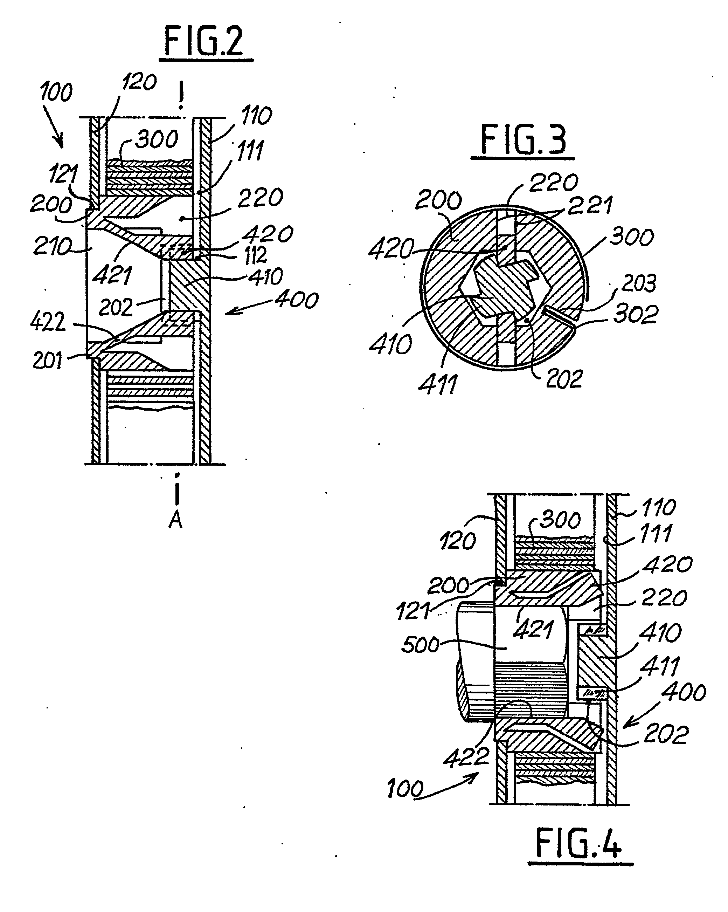

Le dispositif anti-retour 400 comprend un rochet 410 qui présente des dents 411 inclinées, par exemple quatre, et au moins un cliquet 420, ici deux. Dans ce mode de réalisation, le rochet est solidaire du boîtier en particulier du corps 110 et le ou les cliquets du moyeu 200. Comme on le voit, sur les Fig.2 et 4 en particulier, le cliquet 420 se compose d'une came 421, dont on indiquera le rôle par la suite, et d'un bras 422 qui le relie au moyeu au voisinage de la collerette. Comme visible sur la Fig.3, le cliquet de section droite approximativement rectangulaire, est logé dans l'avéole 220 où il peut se déplacer relativement librement en prenant appui, au besoin, contre l'une ou l'autre des parois 221. Le cliquet est mobile entre une première position saillante en sens centripète où il coopère avec les dents du rochet et n'autorise une rotation relative moyeu/boîtier que dans un seul sens (comme dessiné sur les Fig.2 et 3) et une seconde position au moins partiellement escamotée en sens centrifuge où il ne coopère pas avec les dents du rochet et autorise une rotation moyeu/boîtier dans les deux sens (Fig.4).

Le cliquet est normalement sollicité élastiquement vers sa première position saillante par un ressort ; dans ce mode de réalisation c'est le bras 422 qui tient lieu de ressort. Le dispositif anti-retour ne permet donc normalement une rotation que dans un seul sens.

Pour mettre le dispositif anti-retour hors service, c'est-à-dire neutraliser le cliquet il faut le faire passer de sa première à sa seconde position en exerçant un effort à l'encontre de la sollicitation élastique à laquelle il est normalement soumis. Pour cela on introduit de l'extérieur du boîtier un élément mâle dans la cavité 210 pour repousser dans le sens centrifuge le cliquet 420 ce qui l'éloigne des dents 411 du rochet 410 en faisant fléchir le bras 422. Cette action d'introduction pour repousser le cliquet est facilitée par la came 421.

Cette opération de neutralisation du dispositif anti-retour 400 s'obtient facilement avec une broche 500 dont le profil de la section droite est complémentaire de celui de la cavité 210, comme il est illustré sur la Fig.4. Une telle broche peut, par exemple être une clé Allen ou l'extrémité de l'arbre ou du tambour d'un enrouleur de ceinture de sécurité sur lequel est bobinée la sangle.

Le fonctionnement du barillet armé selon l'invention est le suivant.

On supposera que ce barillet est assemblé, les extrémités du ressort ancrées au moyeu et au corps, le boîtier est fermé par le couvercle et le ressort non bandé.

On introduit partiellement dans la cavité 210 une broche 500, par exemple une clé six pans creux associée s'il y a lieu à un clef dynamométrique, de manière à pouvoir entraîner en rotation relative moyeu/boîtier, sans neutraliser le dispositif anti-retour dont le cliquet n'autorise alors une rotation que dans un seul sens. En faisant tourner l'un par rapport à l'autre moyeu/boîtier on bande le ressort pour qu'il développe le couple choisi et/ou procure le nombre de tour requis. Cette opération faite, le retrait de la broche de la cavité laisse la dispositif anti-retour opérer et le barillet reste "armé" sans que l'on ait à se préoccuper d'une quelconque im_mobilisation du moyeu sur le boîtier à l'aide d'un organe auxiliaire amovible, celle-ci étant automatique.

Pour bander le ressort on peut aussi engager totalement à fond dans la cavité 210 une broche spéciale qui présente des évidements de forme appropriée à l'aplomb des cliquets pour ne pas les toucher et les repousser lorsqu'elle est complètement inserée ; un détrompeur peut être prévu pour faciliter le mise en place automatique d'une telle broche avec l'orientation correcte.

Pour mettre en oeuvre le barillet armé, on le place sur l'équipement auquel il est destiné, par exemple l'enrouleur d'une ceinture de sécurité de l'habitacle d'un véhicule, et on l'y fixe. Lors de cette opération on engage à fond la broche 500 dans la cavité 210 à laquelle elle s'accouple, ce qui a pour effet de faire passer automatiquement le cliquet à sa seconde position où il est neutralisé et autorise une rotation dans les deux sens.

Le nombre et la forme des dents du rochet et des cliquets est fonction des efforts à transmettre et à subir et du choix des matériaux dont ils sont faits.

Dans le mode de réalisation dessiné le moyeu peut venir de moulage avec les cliquets de même que le fond du boîtier avec le rochet.

La forme de la came 421 est fonction de la géométrie de l'embout de la broche 500 qui coopère avec elle, des coefficients de frottement relatif came/broche et de l'effort à vaincre developpé par le bras élastique 422.

On observera aussi que pour ce mode de réalisation, les géométries du rochet 410 et de l'alésage 202 sont choisies de manière à ce que le rochet serve aussi de tourillon afin que le moyeu ait un palier à chacune de ses extrémités. Mais rien ne s'oppose à ce que ces deux constituants soient fonctionnellement et/ou physiquement distincts.

Dans le mode de réalisation que l'on vient d'exposer, les cliquets sont mobiles dans un plan longitudinal ; il est clair qu'en modifiant leur configuration, ils peuvent se déplacer dans un plan transversal. De même le sens du déplacement pour passer de la première à la seconde position peut être inversé.

## Revendications

1. Barillet pour ressort spiral prébandé constitué, entre autres, d'un boîtier (100), d'un moyeu (200) logé dans ce boîtier, d'un ressort spiral (300) placé dans ce boîtier et enroulé sur ce moyeu de manière que l'une de ses extrémités soit ancrée au boîtier et d'un dispositif anti-retour pour bander ce ressort et le retenir dans cet état, caractérisé en ce que ce moyeu (200) est monté de manière à pouvoir tourner selon son axe, en ce que l'autre (302) des extrémités de ce ressort (300) est ancrée au moyeu (200) et en ce qu'il comprend entre ce boîtier et ce moyeu ce dispositif anti-retour (400) n'autorisant la rotation relative du boîtier et du moyeu que dans un seul sens, en ce que le dispositif anti-retour est agencé de manière à être mobile entre une première position active où il est opérant et ne permet cette rotation relative que dans le sens autorisé afin de pouvoir bander le ressort et de le retenir dans cet état et une seconde position neutralisée où il est mis hors service et permet cette rotation relative dans les deux sens et en ce que ce dispositif est accessible de l'extérieur du boîtier de manière à pouvoir passer de l'une à l'autre de ses deux positions.

2. Barillet selon la revendication 1, caractérisé en ce que ce dispositif anti-retour est constitué d'un rochet (410) et d'au moins un cliquet (420) qui sont organisés de manière que l'un de ces éléments soit solidaire du boîtier et l'autre du moyeu.

3. Barillet selon la revendication 2, caractérisé en ce que le rochet est solidaire du boîtier et le ou les cliquets sont solidaires du moyeu.

4. Barillet selon l'une quelconque des revendications 2 et 3, caractérisé en ce que le moyeu est creusé d'une cavité (210) et en ce que le ou les cliquets son placés au moins partiellement dans cette cavité.

5. Barillet selon l'une quelconque des revendications 2 à 4, caractérisé en ce que le moyeu présente au moins un alvéole (220) radial orienté longitudinalement et présentant deux parois (221) vis-à-vis parallèles au plan méridien de l'alvéole et en ce que le cliquet y est au moins logé partiellement de manière à pouvoir prendre appui sur ces parois et à pouvoir s'y déplacer entre une première position au moins pariellement saillante où il coopère avec le rochet et une seconde position au moins partiellement escamotée où il ne coopère pas avec la rochet.

6. Barillet selon l'une quelconque des revendications 1 à 5, caractérisé en ce que le dispositif est sollicité élastiquement de sa première à sa deuxième position.

7. Barillet selon l'une quelconque des revendications 3 à 6, caractérisé en ce que le cliquet est muni d'une came (421) et en ce que cette came est accessible de l'extérieur du boîtier.

8. Barillet selon l'une quelconque des revendications 4 à 7, caractérisé en ce que cette came (421) est placée sur le cliquet face à l'axe du moyeu et en ce que cette came fait saillie dans la cavité (210) du moyeu au moins partiellement lorsque le cliquet occupe sa première position.

9. Barillet selon l'une quelconque des revendications 1 à 8, caractérisé en ce que le boîtier est composé d'un corps (110) présentant un fond (111) et d'un couvercle (120), en ce que le rochet est solidaire de la surface intérieure du fond, en ce que le couvercle (120) est percé d'un orifice (121) à l'aplomb du rochet et en ce que le moyeu est logé dans le boîtier de manière à y tourillonner grâce au rochet et à l'orifice et de manière que par cet orifice on puisse faire passer le dispositif de l'une à l'autre de ses deux positions.

10. Barillet selon l'une quelconque des revendications 4 à 9, caractérisé en ce que la cavité (210) du moyeu présente une section droite à profil polygonal.

11. Barillet selon l'une quelconque des revendications 1 à 10, caractérisé en ce que le moyeu est fait en une matière plastique relativement élastique et en ce que moyeu et cliquet sont moulés d'un seul tenant.

12. Barillet selon l'une quelconque des revendications 1 à 11, caractérisé en ce que le corps et le couvercle sont assemblés par encliquetage.

13. Application du barillet selon l'une quelconque des revendications 1 à 12 à un enrouleur de ceinture de sécurité de véhicule.

**Claims**

1. A barrel for a prestressed spiral spring formed, inter alia, by a housing (100), a hub (200) mounted in the housing, and a spiral spring (300) so placed in the housing and wound around the hub that one of its ends is anchored to the housing, a non-return device being provided to stress the spring and retain it in that condition, characterized in that the hub (200) is so mounted that it can rotate around its axis, the other end (302) of the spring (300) is anchored to the hub (200), and it comprises between the housing and the hub the non-return device (400) allowing the housing and the hub to rotate in relation to one another in only one direction, the non-return device is adapted to move into a first operative position, in which it allows such relative rotation only in the appropriate direction to enable the spring to be stressed and retained in that condition, and a second, neutralized position in which it is rendered inoperative and allows such relative rotation in both directions, said device being accessible from the outside of the housing, so that it can be moved from one of its two positions to the other.

2. A barrel according to claim 1, characterized in that the nonreturn device comprises a ratchet (410) and at least one pawl (420) which are so arranged that one of said elements is integral with the housing and the other is integral with the hub.

3. A barrel according to claim 2, characterized in that the ratchet is integral with the housing and the or each pawl is integral with the hub.

4. A barrel according to either of claims 2 or 3, characterized in that the hub is formed with a cavity (210), and the or each pawl is disposed at least partially in said cavity.

5. A barrel according to any of claims 2 to 4, characterized in that the hub is formed with at least one radial recess (220) orientated longitudinally and having two facing walls (221) parallel with the meridian plane of the recess, and the pawl is at least partially received therein so that it can bear against said walls and be displaced therein between a first position in which it at least partially projects and cooperates with the ratchet, and a second at least-partially retracted position in which it does not cooperate with the ratchet.

6. A barrel according to any of claims 1 to 5, characterized in that the device is resiliently biased from its first position to its second position.

7. A barrel according to any of claims 3 to 6, characterized in that the pawl has a cam (421) which is accessible from outside the housing.

8. A barrel according to any of claims 4 to 7, characterized in that the cam (421) is disposed on the pawl facing the axis of the hub and at least partially projects into the cavity (210) in the hub when the pawl occupies its first position.

9. A barrel according to any of claims 1 to 8, characterized in that the housing comprises a body (110) having a base (111) and a cover (120), the ratchet is integral with the inner surface of the base of the body, the cover (120) is formed with an orifice (121) in line with the ratchet, and the hub is so received in the housing as to be able to be journalled therein by means of the ratchet and the orifice, so that the non-return device can pass from one of its two positions to the other through said orifice.

10. A barrel according to any of claims 4 to 9, characterized in that the cavity (210) in the hub has a polygonal cross-sectional shape.

11. A barrel according to any of claims 1 to 10, characterized in that the hub is made from a relatively resilient plastics material and the hub and pawl are moulded in one piece.

12. A barrel according to any of claims 1 to 11, characterized in that the body and the cover are assembled by being clipped together.

13. Application of the barrel according to any of claims 1 to 12 to a vehicle safety belt winder.

**Patentansprüche**

1. Kassette für eine vorgespannte Spiralfeder, die unter anderem aus einem Gehäuse (100), einer in dem Gehäuse sitzenden Nabe (200), einer Spiralfeder (300), die in dem Gehäuse sitzt und auf die Nabe so aufgerollt ist, daß eine ihrer Enden an dem Gehäuse verankert ist, und einer Rückdrehsicherungsvorrichtung zum Spannen und Gespannthalten der Feder, dadurch gekennzeichnet, daß die Nabe (200) um ihre Achse drehbar montiert ist, daß das andere Ende (302) der Feder (300) an der Nabe (200) verankert ist, daß zwischen dem Gehäuse und der Nabe die Rückdrehsicherungsvorrichtung (400) vorgesehen ist, die die Relativdrehung von Gehäuse und Nabe nur in einer einzigen Richtung zuläßt, daß die Rückdrehsicherungsvorrichtung so ausgebildet ist, daß sie zwischen einer ersten aktiven Stellung, in der sie wirksam ist und die Relativdrehung nur in der zugelassenen Richtung gestattet, damit die Feder gespannt und in diesem Zustand gehalten werden kann, und einer zweiten unaktiven Stellung beweglich ist, in der sie außer Betrieb ist und die Relativdrehung in beiden Richtungen gestattet, und daß die Rückdrehsicherungsvorrichtung von außerhalb des Gehäuses aus zugänglich ist, um von einer ihrer Stellungen in die andere gebracht werden zu können.

2. Kassette nach Anspruch 1, dadurch gekennzeichnet, daß die Rückdrehsicherungsvorrichtung aus einem Sperrad (410) und mindestens einer Klinke (420) besteht, wobei eines dieser Elemente an dem Gehäuse und das andere an der Nabe befestigt ist.

3. Kassette nach Anspruch 2, dadurch gekennzeichnet, daß das Sperrad an dem Gehäuse und die Klinke bzw. die Klinken an der Nabe befestigt sind.

4. Kassette nach einem der Ansprüche 2 und 3, dadurch gekennzeichnet, daß die Nabe eine Aussparung (210) besitzt und daß die Klinke bzw. die Klinken zumindest teilweise in dieser Aussparung angeordnet sind.

5. Kassette nach einem der Ansprüche 2 bis 4, dadurch gekennzeichnet, daß die Nabe mindestens eine radiale, in Längsrichtung gerichtete Nut (220) mit zwei einander gegenüberstehenden, zur Mittelebene der Nut parallelen Wänden (221) besitzt und daß die Klinke zumindest teilweise in dieser Nut sitzt, so daß sie an ihren Wänden anliegen kann und sich in ihr zwischen einer ersten, zumindest teilweise vorstehenden Stellung, in der sie mit dem Sperrad zusammenwirkt, und einer zweiten, zumindest teilweise eingezogenen Stellung bewegen kann, in der sie nicht mit dem Sperrad zusammenwirkt.

6. Kassette nach einem der vorhergehenden Ansprüche, dadurch gekennzeichnet, daß die Vorrichtung federnd aus ihrer ersten Stellung in Richtung auf die zweite Stellung beaufschlagt ist.

7. Kassette nach einem der Ansprüche 3 bis 6, dadurch gekennzeichnet, daß die Klinke mit einem Nocken (421) versehen ist, der von außerhalb des Gehäuses zugänglich ist.

8. Kassette nach einem der Ansprüche 4 bis 7, dadurch gekennzeichnet, daß der Nocken (421) an der Klinke gegenüber der Achse der Nabe angeordnet ist und zumindest teilweise in die Aussparung (210) der Nabe hineinragt, wenn die Klinke ihre erste Stellung einnimmt.

9. Kassette nach einem der vorhergehenden Ansprüche, dadurch gekennzeichnet, daß das Gehäuse aus einem Körper (110) mit einem Boden (111) und einem Deckel (120) besteht, daß das Sperrad an der Innenseite des Bodens befestigt ist, daß der Deckel (120) in der Achse des Sperrads eine Bohrung (121) aufweist und daß die Nabe in dem Gehäuse so angeordnet ist, daß sie mit Hilfe des Sperrads und der Bohrung drehbar gelagert ist und daß die Vorrichtung über diese Bohrung aus der einen in die andere Stellung gebracht werden kann.

10. Kassette nach einem der Ansprüche 4 bis 9, dadurch gekennzeichnet, daß die Aussparung (210) der Nabe einen mehreckigen Querschnitt besitzt.

11. Kassette nach einem der vorhergehenden Ansprüche, dadurch gekennzeichnet, daß die Nabe aus einem relativ elastischen Kunststoff besteht und daß Nabe und Klinke einstückig gegossen sind.

12. Kassette nach einem der vorhergehenden Ansprüche, dadurch gekennzeichnet, daß der Körper und der Deckel durch Einklinkung zusammengefügt sind.

13. Verwendung der Kassette nach einem der vorhergehenden Ansprüche in einem Sicherheitsgurtaufroller für Fahrzeuge.

FIG.1

FIG.2

FIG.3

FIG.4